# EUROPÄISCHE PATENTSCHRIFT

(11) **EP 3 287 746 B1**
(45) Veröffentlichungstag und Bekanntmachung des Hinweises auf die Patenterteilung: **10.06.2020**
(21) Anmeldenummer: 17020364.0
(22) Anmeldetag: 18.08.2017
(51) Int. Cl.: G01C 21/36

(54) **VERFAHREN ZUM BETREIBEN EINER NAVIGATIONSVORRICHTUNG FÜR EINE RÜCKFÜHR-NAVIGATION, NAVIGATIONSVORRICHTUNG UND KRAFTFAHRZEUG**
METHOD FOR OPERATING A NAVIGATION DEVICE FOR RETURN NAVIGATION, NAVIGATION DEVICE AND MOTOR VEHICLE
PROCÉDÉ DE FONCTIONNEMENT D'UN DISPOSITIF DE NAVIGATION POUR UNE NAVIGATION EN MARCHE ARRIÈRE, DISPOSITIF DE NAVIGATION ET VÉHICULE AUTOMOBILE

(30) Priorität: 24.08.2016 CZ 20160510
(43) Veröffentlichungstag der Anmeldung: 28.02.2018
(73) Patentinhaber: Skoda Auto a.s., 29301 Mladá Boleslav (CZ)
(72) Erfinder: WEBER, Norbert, 12000 Praha (CZ)

(56) Entgegenhaltungen:
- EP-A1- 2 257 089
- EP-A2- 1 288 886
- WO-A2-2008/064267
- WO-A2-2015/061633
- DE-A1-102010 034 456
- US-A1- 2009 318 163
- US-A1- 2012 323 485
- US-A1- 2015 308 849

## Beschreibung

Die Erfindung betrifft ein Verfahren zum Betreiben einer Navigationsvorrichtung z.B. eines Kraftfahrzeugs. Es ist möglich, mit der Navigationsvorrichtung einen Speicherbefehl zum Erzeugen eines Speichereintrags eines Navigationsziels umzusetzen. Zu der Erfindung gehören auch die Navigationsvorrichtung, die gemäß dem Verfahren betrieben werden kann, sowie ein Kraftfahrzeug mit der Navigationsvorrichtung.

Häufig angesteuerte Orte können in einer Navigationsvorrichtung als fest vorgegebene Reiseziele (so genannte Favoriten) gespeichert werden. Das Anlegen oder Erzeugen eines solchen Speichereintrags für einen Favoriten bedeutet in der Regel, dass man mehrere Bedienschritte durchführen muss, um zunächst ein Speichermenü auszuwählen und damit dann eine Positionsangabe unter einem Namen abzuspeichern. Aufgrund des hohen Bedienaufwands wird diese Funktion bei Navigationsvorrichtungen in der Regel nur für wichtige und/oder häufig verwendete Reiseziele verwendet.

Die EP 1 288 886 A2 offenbart ein Routenführungssystem, Verfahren und Programm für ein Kraftfahrzeug, welches eine Rückführung zu einem Ausgangspunkt eine Route ermöglicht. Die US 2012/323485 A1 offenbart eine Routenfindungsvorrichtung, ein Routenfindungsverfahren und Programm. Die Routenfindungsvorrichtung ist dazu eingerichtet, eine Route zu erfassen und als Rückreiseroute zu verwenden.

Die DE 10 2010 034 456 A1 offenbart ein Verfahren zum Aufzeichnen und Abrufen jüngster Standortdaten und ein zugehöriges mobiles Navigationsgerät.

Die US 2009/318163 A1 offenbart Techniken zur Verfolgung von Zielen auf einer mobilen Rechenvorrichtung.

Die US 2015/308849 A1 offenbart ein System und ein Verfahren zum Versenden eines Zielorts an ein Kraftfahrzeugnavigationssystem von einem mobilen elektronischen Gerät.

Die WO 2015/061633 A2 offenbart die Übergabe eines Reiseziels durch die Navigationsvorrichtung eines Kraftfahrzeugs an ein mobiles Endgerät.

Der Erfindung liegt die Aufgabe zugrunde, mittels einer Navigationsvorrichtung eine Reise zu planen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Verfahren zum Betreiben einer Navigationsvorrichtung bereitgestellt. In an sich bekannter Weise wird durch die Navigationsvorrichtung wiederholt aus einer Lokalisierungseinrichtung eine Positionsangabe einer aktuellen Position der Navigationsvorrichtung empfangen. Somit ist stets die aktuelle Position bekannt. Zu Beginn oder während einer Reise wird ein vorbestimmter Speicherbefehl empfangen. In Abhängigkeit von dem Speicherbefehl wird die aktuelle Positionsangabe in einem vorbestimmten Zwischenspeicher der Navigationsvorrichtung als Rückreiseziel zwischengespeichert. Es ist also keine Angabe eines Namens für diese Positionsangabe nötig, wie dies ansonsten bei den eingangs beschriebenen Favoriten der Fall ist. Die Positionsangabe wird in dem Zwischenspeicher gespeichert und erhält somit ohne eine Namensvergabe die vorbestimmte Funktion des Rückreiseziels.

Eine Lokalisierungseinrichtung zum Ermitteln der aktuellen Position kann zum Beispiel ein Empfänger für ein Positionssignal eines GNSS (Global Navigation Satellite System), zum Beispiel des GPS (Global Positioning System), sein.

Die Navigationsvorrichtung ist in einem Kraftfahrzeug bereitgestellt. Der besagte Beginn einer Reise kann zum Beispiel durch ein Zündung-ein-Signal des Kraftfahrzeugs signalisiert sein. Der Beginn kann auch dadurch definiert sein, dass der Reise eine vorbestimmte Aufenthaltsphase der Navigationsvorrichtung vorangegangen ist, die länger als eine vorbestimmte Mindestzeitdauer, zum Beispiel eine Stunde, ist. Die Aufenthaltsphase kann z.B. eine Parkphase des besagten Kraftfahrzeugs sein. Ein Speicherbefehl kann zum Beispiel durch eine manuelle Betätigung eines Betätigungselements von einem Benutzer erzeugt werden oder durch einen Sprachbefehl, der von einer Spracherkennungseinrichtung empfangen und erkannt werden kann. Der Speicherbefehl kann auch z.B. über ein Bedienfeld eines berührungssensitiven Bildschirms (Touchscreen) empfangen werden. Der Speicherbefehl kann auch ohne ein Zutun eines Benutzers zum Beispiel automatisiert beim Start des Kraftfahrzeugs erzeugt werden, wenn die Zündung des Kraftfahrzeugs eingeschaltet wird.

Wenn nach dem Abspeichern des Rückreiseziels beispielsweise die Zündung des besagten Kraftfahrzeugs erneut ausgeschaltet war oder eine Parkphase erkannt worden ist, kann danach die in dem Zwischenspeicher abgespeicherte Positionsangabe verwendet werden, um für eine Navigationsassistenz der Navigationsvorrichtung als Reiseziel für eine Rückreise einzustellen. Dies erfolgt aber nur, falls ein vorbestimmter Rückführbefehl empfangen wird oder vorliegt. Der Rückführbefehl kann beispielsweise wie der Speicherbefehl durch manuelle Betätigung eines Betätigungselements, durch einen Sprachbefehl oder an einem Touchscreen durch einen Benutzer erzeugt werden oder auch ohne ein Zutun des Benutzers z.B. beim Start des Kraftfahrzeugs für die nachfolgende Reise automatisiert erzeugt werden. Falls der Rückführbefehl vorliegt, wird aus dem Zwischenspeicher die Positionsangabe des Rückreiseziels als Reiseziel für die Rückreise eingestellt. Daraufhin kann also die Navigationsassistenz in bekannter Weise Manövrieranweisungen erzeugen, durch welche der Benutzer der Navigationsvorrichtung zurück zu dem Rückreiseziel manövriert oder geleitet oder geführt wird.

Durch die Erfindung ergibt sich somit der Vorteil, dass durch einen einzelnen Speicherbefehl eine aktuelle Position des Kraftfahrzeugs als Rückreiseziel festgelegt wird und durch einen weiteren Befehl, nämlich den Rückführbefehl, die Navigationsassistenz der Navigationsvorrichtung eine Rückreise zu diesem Rückreiseziel bereitstellt. Während der besagten nachfolgenden Reise kann also der Benutzer jederzeit festlegen, dass er zurückkehren möchte. Es steht dann in dem Zwischenspeicher das Rückreiseziel bereit. So kann er beispielsweise eine Zurück-Taste (Back-Taste) drücken oder den Sprachbefehl: "Bringt mich zurück!" aussprechen und wird dann durch die Navigationsassistenz zu dem Rückreiseziel angeführt.

Es ist vorgesehen, das in dem Zwischenspeicher gespeicherte Rückreiseziel in Abhängigkeit von einem Übertragungsbefehl an eine andere Navigationsvorrichtung auszusenden. Die erste Navigationsvorrichtung ist in einem Kraftfahrzeug bereitgestellt und bei Verlassen des Kraftfahrzeugs wird das Rückreiseziel in einen Zwischenspeicher einer Navigationsvorrichtung, die durch ein mobiles Endgerät eines Benutzers bereitgestellt ist, übertragen. Der Übertragungsbefehl wird dabei in Abhängigkeit von einer Position des mobilen Endgeräts bezüglich des Kraftfahrzeugs erzeugt, sodass zum Beispiel beim Verlassen des Kraftfahrzeugs das Rückreiseziel aus dem Kraftfahrzeug an das mobile Endgerät übertragen wird. Andersherum kann bei Einsteigen in das Kraftfahrzeug ein Rückreiseziel in die Navigationsvorrichtung des Kraftfahrzeugs übertragen werden. Das Einsteigen kann zum Beispiel anhand einer relativen Position des mobilen Endgeräts zu dem Kraftfahrzeug und/oder anhand einer funkbasierten Kopplung des mobilen Endgeräts mit dem Kraftfahrzeug erkannt werden.

Zu der Erfindung gehören auch optionale Weiterbildungen, durch deren Merkmale sich zusätzliche Vorteile ergeben.

In der beschriebenen Weise kann vorgesehen sein, dass der Speicherbefehl und/oder der Rückführbefehl über eine Bedieneinrichtung empfangen wird, d.h. ein Benutzer den Speicherbefehl und/oder den Rückführbefehl geben kann. Hierdurch ist es möglich, ohne aufwändige automatisierte Entscheidung jederzeit die Rückreise einleiten zu können.

Bevorzugt ist bei dieser Variante vorgesehen, dass durch die Bedieneinrichtung für das Zwischenspeichern des Rückreiseziels in dem Zwischenspeicher ein dediziertes, direkt an der Navigationsvorrichtung zugängliches Betätigungselement bereitgestellt wird. Dies kann zum Beispiel ein mechanisches Betätigungselement, zum Beispiel eine Taste, oder ein Bedienfeld auf einem Touchscreen sein, also ein so genannter Soft-Key. Diese Ausführungsform weist den Vorteil auf, dass das Abspeichern des Rückreiseziels einschrittig erfolgt, also durch eine einzelne oder einzige Betätigung des Bedienelements.

Bevorzugt ist hierbei vorgesehen, dass bei wiederholtem Betätigen des Betätigungselements zunächst der Speicherbefehl (1. Betätigung) und danach der Rückführbefehl (2. Betätigung) erzeugt wird. Dies kann auch in der Weise vorgesehen sein, dass bei einer 3. Betätigung wieder der Speicherbefehl und bei einer 4. Betätigung der Rückführbefehl erzeugt wird. Diese Weiterbildung weist den Vorteil auf, dass zum Planen oder Strukturieren einer Reise der Beginn einer Hinreise durch ein erstes Betätigen des Betätigungselements und der Beginn einer Rückreise durch erneutes Betätigen des selben Betätigungselements ermöglicht ist.

Es kann bei einem solchen Betätigungselement der Speicherbefehl auch zweimal hintereinander erzeugt werden, nämlich beim 1. und beim 3. Betätigen. Bei Empfangen eines weiteren Speicherbefehls wird bevorzugt vor dem Abspeichern einer weiteren aktuellen Positionsangabe in dem Zwischenspeicher, also vor dem Überschreiben oder Löschen des aktuell gespeicherten Rückreiseziels, eine Reisezielbezeichnung oder ein Favoritenname ermittelt und die bereits in dem Zwischenspeicher zwischengespeicherte Positionsangabe des aktuellen Rückreiseziels in einen anderen Reisezielspeicher übertragen und dort unter der Reisezielbezeichnung abgespeichert. Die Reisezielbezeichnung kann zum Beispiel über die besagte Bedieneinrichtung empfangen werden, indem zum Beispiel ein Benutzer die Reisezielbezeichnung, also den Namen des Rückreiseziels, eingibt. So steht das aktuell in dem Zwischenspeicher gespeicherte Rückreiseziel in Zukunft oder für nächste oder weitere Reisen bereit. Das permanente oder dauerhafte Abspeichern im Reisezielspeicher kann auch unter der Bedingung einer Rückfrage beim Benutzer erfolgen, d.h. der Benutzer wird zunächst gefragt, ob er das aktuelle Rückreiseziel aus dem Zwischenspeicher in dem Reisezielspeicher unter einer Reisezielbezeichnung abspeichern möchte. Falls der Benutzer ablehnt, wird die aktuelle Positionsangabe direkt in dem Zwischenspeicher gespeichert und somit das bis dahin gespeicherte Rückreiseziel gelöscht oder überschrieben. Der Benutzer kann auch am Ender einer Rückreise gefragt werden, ob er das Rückreiseziel dauerhaft in dem Reisezielspeicher speichern möchte. Es kann bei Bejahen eine Reisezielbezeichnung von dem Benutzer abgefragt und das Reiseziel dauerhaft unter der Reisezielbezeichnung im Reisezielspeicher gespeichert werden.

Indem das Rückreiseziel in dem Zwischenspeicher gespeichert ist, kann bei zwischengespeichertem Rückreiseziel eine von dem Rückreiseziel unabhängige Routenführung durch die Navigationsassistenz durchgeführt werden. Es kann also in Abhängigkeit von dem Speicherbefehl ein Rückreiseziel in dem Zwischenspeicher gespeichert worden sein und anschließend die Navigationsvorrichtung weiter benutzt werden und hierbei die Navigationsassistenz der Navigationsvorrichtung für eine oder mehrere Routenführungen verwendet werden. Der Zwischenspeicher bleibt davon unbeeinflusst. So kann zum Beispiel in dem Zwischenspeicher ein Rückreiseziel A gespeichert sein und die Navigationsvorrichtung für eine Reise zu einem ersten Reiseziel B verwendet werden. Ein Benutzer kann sich dann eine Routenführung von dem Reiseziel B zu einem weiteren Reiseziel C durch die Navigationsassistenz der Navigationsvorrichtung bereitstellen lassen. Am Reiseziel C kann der Benutzer dann den Rückführbefehl erzeugen oder eingeben oder auslösen, wodurch die Navigationsassistenz mit dem Rückreiseziel A programmiert oder konfiguriert wird und hierdurch die Navigationsassistenz eine Routenführung für eine Rückreise (vom Reiseziel C) zum Rückreiseziel A durchführt.

Falls ein Rückreiseziel für mindestens eine vorbestimmte Höchstzeitdauer in dem Zwischenspeicher gespeichert worden ist, kann es sein, dass ein Benutzer vergessen hat, welche Positionsangabe in dem Zwischenspeicher gespeichert ist. Entsprechend ist bevorzugt vorgesehen, das in dem Zwischenspeicher gespeicherte Rückreiseziel nach einer vorbestimmten Zeitdauer zu löschen. Wird danach der Rückführbefehl erzeugt, so kann eine Navigationsassistenz zu einem unbekannten Rückreiseziel verhindert werden. So kann dem Benutzer z.B. signalisiert werden, dass der Zwischenspeicher leer ist.

Zum automatisierten Erzeugen des Speicherbefehls kann vorgesehen sein, dass eine Aufenthaltsphase anhand eines vorbestimmten Verweilkriteriums erkannt wird und der Speicherbefehl ohne ein Zutun eines Benutzers zu Beginn einer an die Aufenthaltsphase anschließenden Reise erzeugt wird. Das Verweilkriterium kann z.B. besagen, dass ein Kraftfahrzeug, in welchem sich die Navigationsvorrichtung befindet, länger als eine vorbestimmte Mindestzeitdauer ausgeschaltet war. Z.B. kann vorgesehen sein, dass eine Parkphase des Kraftfahrzeugs als Aufenthaltsphase erkannt wird, falls das Kraftfahrzeug für mindestens eine Stunde oder mindestens 4 Stunden oder mindestens einen Tag ausgeschaltet war. Zusätzlich oder alternativ dazu kann das Verweilkriterium zum Beispiel umfassen, dass das Kraftfahrzeug an einem Ort geparkt war, der ein vorbestimmtes Auswärtskriterium erfüllt. Zum Beispiel kann als Auswärtskriterium vorgesehen sein, dass der Speicherbefehl nur erzeugt wird, falls das Kraftfahrzeug außerhalb einer vorbestimmten Heimregion des Kraftfahrzeugs, in welcher das Kraftfahrzeug sich mit einer vorbestimmten Mindesthäufigkeit auffällt, erzeugt wird. Mit anderen Worten wird der Speicherbefehl immer nur dann automatisiert erzeugt, wenn sich das Kraftfahrzeug in einer fremden Umgebung befindet. So kann zum Beispiel verhindert werden, dass im Zwischenspeicher regelmäßig die Wohnadresse des Benutzers der Navigationsvorrichtung gespeichert wird, also eine Adresse, die der Benutzer ohnehin schon kennt. Es kann auch vorgesehen sein, dass vor dem Abspeichern eines Rückreiseziels in den Zwischenspeicher überprüft wird, ob in dem besagten Reisezielspeicher bereits ein Favorit oder Reiseziel gespeichert ist, welches der aktuellen Positionsangabe entspricht. Dann ist das Zwischenspeichern der aktuellen Positionsangaben im Zwischenspeicher unnötig und wird entsprechend nicht durchgeführt.

Es kann vorgesehen sein, dass eine seit dem Abspeichern des Rückreiseziels zurückgelegte Reiseroute gespeichert wird und die Navigationsassistenz für die Rückreise zu dem Rückreiseziel entlang der gespeicherten Reiseroute durchgeführt wird. Somit sind also die Hinreise und die Rückreise in Bezug auf die Reiseroute identisch. Hierdurch ergibt sich der Vorteil, dass die gesamte Reiseroute rekonstruiert werden kann, nicht nur das Rückreiseziel.

Wie bereits ausgeführt, umfasst die Erfindung auf die Navigationsvorrichtung für ein Kraftfahrzeug, wobei die Navigationsvorrichtung eine Prozessoreinrichtung aufweist, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung einen Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Die Navigationsvorrichtung kann als ein Gerät für ein Kraftfahrzeug ausgestaltet sein, z.B. als Navigationsgerät oder Infotainmentsystem (Information-Unterhaltungssystem). Die Navigationsvorrichtung kann als portables, mobiles Endgerät ausgestaltet sein, also zum Beispiel als Smartphone oder als Tablet-PC oder als Smartwatch.

Durch Bereitstellen der Erfindung gemäß Navigationsvorrichtung in einem Kraftfahrzeug ergibt sich das erfindungsgemäße Kraftfahrzeug. Das erfindungsgemäße Kraftfahrzeug ist bevorzugt als Kraftwagen, insbesondere als Personenkraftwagen oder Lastkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: eine schematische Darstellung einer Ausführungsform der erfindungsgemäßen Navigationsvorrichtung, wie sie in dem Kraftfahrzeug von Fig. 1 bereitgestellt sein kann; und
- Fig. 3: ein Flussdiagramm zur Veranschaulichung einer Ausführungsform des erfindungsgemäßen Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

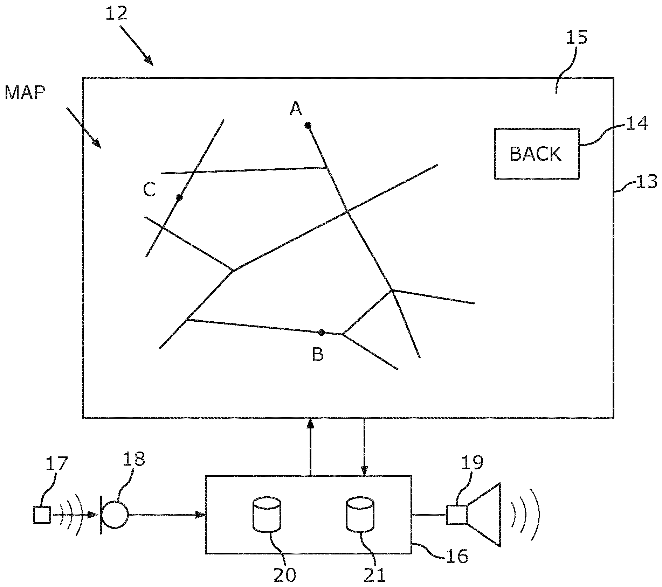

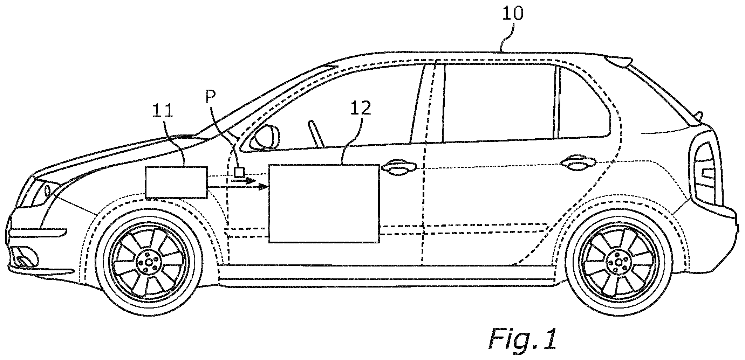

Fig. 1 zeigt ein Kraftfahrzeug 10, bei dem sich zum Beispiel um einen Kraftwagen, insbesondere einen Personenkraftwagen oder Lastkraftwagen, handeln kann. In dem Kraftfahrzeug 10 kann eine Empfangseinrichtung 11 für ein Positionssignal eines GNSS, zum Beispiel des GPS, bereitgestellt sein. Das Positionssignal gibt eine aktuelle Position P an. Des Weiteren weist das Kraftfahrzeug 10 eine Navigationsvorrichtung 12 auf. Die Navigationsvorrichtung 12 kann zum Beispiel Bestandteil eines Infotainmentsystems des Kraftfahrzeugs 10 sein.

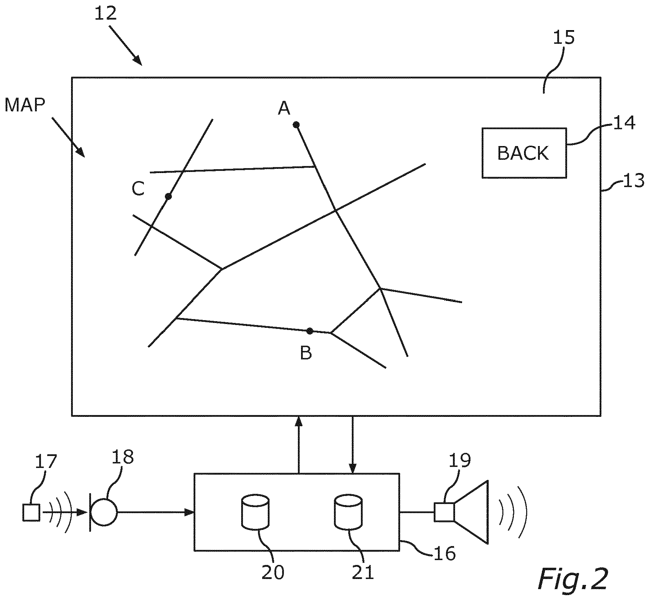

Fig. 2 zeigt die Navigationsvorrichtung 12 noch einmal genauer. Die Navigationsvorrichtung 12 kann eine Anzeigeeinrichtung 13 aufweisen, bei der sich zum Beispiel um einen Bildschirm handeln kann. Die Anzeigeeinrichtung 13 kann auch berührungssensitiv sein, also ein Touchscreen, so das ein Betätigungselement 14 auf einer Anzeigefläche 15 der Anzeigeeinrichtung 13 dargestellt sein kann. Die Navigationsvorrichtung 12 kann eine Prozessoreinrichtung 16 aufweisen, durch welche die Anzeigeeinrichtung 13 gesteuert sein kann und eine Betätigung des Betätigungselements 14 detektiert werden kann. Des Weiteren kann vorgesehen sein, dass ein Sprachbefehl 17 über eine Spracherkennungseinrichtung 18 mittels einer Mikrofonanordnung erfasst und durch die Prozessoreinrichtung 16 empfangen werden kann. Des Weiteren kann durch die Prozessoreinrichtung 16 zum Beispiel auch für eine Navigationsassistenz eine Sprachausgabe durch eine Audioausgabeeinrichtung 19 ausgegeben werden. Somit können zum Beispiel Fahranweisungen an einen Fahrer des Kraftfahrzeugs 10 ausgegeben werden. Auf der Anzeigeeinrichtung 13 kann durch die Prozessoreinrichtung 16 zum Beispiel auch eine Straßenkarte MAP für die Navigationsassistenz angezeigt werden.

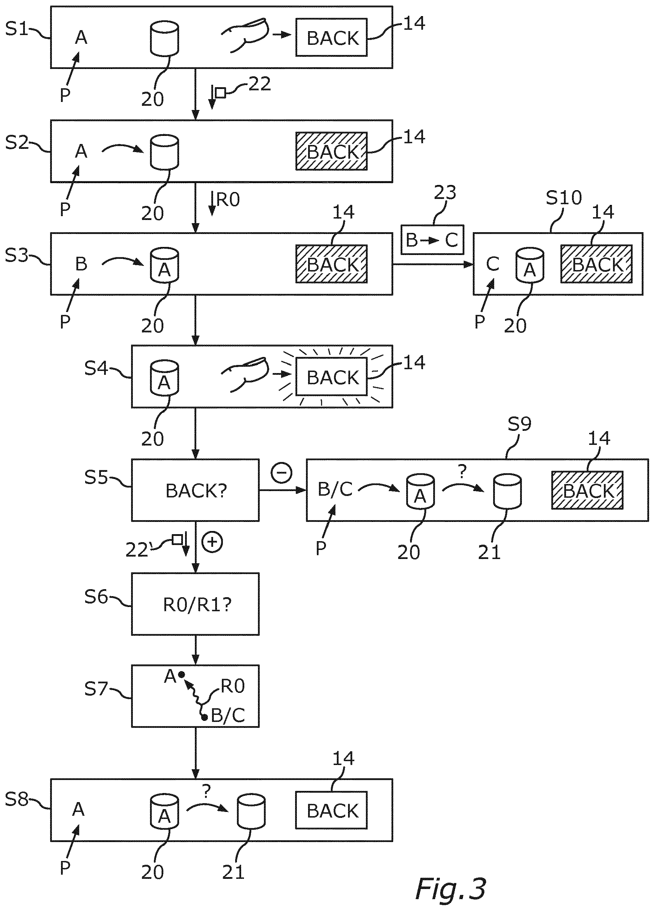

Im Folgenden ist anhand von Fig. 3 geschrieben, wie für die Navigationsassistenz durch die Navigationsvorrichtung 12 ein Verfahren mit einer Rückführ-Navigation bereitgestellt werden kann. Diese Rückführ-Navigation wird im Folgenden auch als Funktion "BACK" bezeichnet. Sie kann durch das Betätigungselement 14 und/oder den Sprachbefehl 17 gesteuert werden. Die Navigationsvorrichtung 12 kann z.B. in der Prozessoreinrichtung 16 eine Zwischenspeicher 20 und einen Reisezielspeicher 21 bereitstellen.

Die Rückführunqsassistenz oder Rückführ-Navigation ist für Situationen vorgesehen, wo man einfach nur dahin zurück möchte, von wo aus man gestartet ist. Z.B. man möchte eine Person z.B. von einem Parkplatz aus mitnehmen und später wieder genau dorthin zurück bringen. Mit der BACK-Funktion ist dies auf der obersten Ebene der Navigation durch direkte Bedienung oder Betätigung des Betätigungselements 14 zu realisieren, da nur Koordinaten abspeichert werden, welche sowieso in der Navigationsvorrichtung über die Empfangseinrichtung 11 vorhanden sind.

Ein Funktions-Szenario 1 kann eine Reise von A nach B vorsehen. Nach dem Einsteigen und dem Starten der Navigation ist der sog. "Back Button" (Betätigungselement 14) als Soft-Key auf der Oberfläche des Navigations-Bildschirms hinterlegt.

Schritt S1: Am Start-/Standort A wird durch Betätigen des "Back Buttons" ein Speicherbefehl 22 erzeugt. Bei Vorliegen des Speicherbefehls 22 werden die aktuellen Koordinaten im Zwischenspeicher 20 gespeichert.

Schritt S2: Der "Back" Button wurde am Startpunkt A betätig. Der Button (z.B. schwarzes ICON) wechselt nach dem Betätigen z.B. auf die Farbe Grün, um anzuzeigen, dass die "Back" Funktion nun aktiv ist. Fahrzeug befindet sich dann entlang einer originären Reiseroute R0 auf der Reise zu einem Zielort B. "Back" Button bleibt, da die Funktion aktiviert wurde, z.B. grün.

Schritt S3: Fahrzeug erreicht Zielort B. "Back Button" ist weiterhin aktiv (z.B. Farbe grün). Die Koordinaten A bleiben im Fahrzeug im Zwischenspeicher 20 gespeichert. Verlässt der Fahrer für einen Zeitraum "X" das Fahrzeug, so bleibt die "BACK" Funktion als Speicher aktiv.

Schritt S4: Wird der "BACK" Button beim ANHALTEN mit dem Fahrzeug, wo immer man auch ist, (hier im Beispiel Zielort B) erneut gedrückt, fängt der Button z.B. zu blinken an. Durch ein Betätigen des "BACK" Buttons nach einer Rückkehr ins Fahrzeug, geschieht dies ebenfalls.

Schritt S5: Eine dann erscheinende Zielrückführungs-Meldung (BACK?) muss mit Ja/Nein bestätigt werden.

Schritt S6: Bei einer Bestätigung der Zielrückführungs-Meldung mit "Ja" (hier symbolisiert durch "+") wird ein Rückführbefehle 22' erzeugt und daraufhin werden zwei Routen angeboten: Route R1 die kürzeste Verbindung zu Rückreiseziel A aus dem Zwischenspeicher 20, von wo aus das Fahrzeug ursprünglich gestartet ist und demnach die Koordinaten bei der Rückführung hinterlegt worden sind, oder aber die originäre Route R2, wo anhand der Koordinaten die exakt gleiche Strecke zurück navigiert wird, von wo aus man gekommen ist.

Schritt S7: Bei Bestätigung auf der Anzeigefläche 15 von z.B. Route R0 erschient die Zielrückrührungs-Route dem der Anzeigeeinrichtung 13, d.h. in diesem Fall erfolgt Rückreise genau so, wie man gekommen ist anhand der Koordinaten.

Schritt S8: Die Reise endet bei Start-/Standort A. Die Schrift "Back" im Soft-Key erscheint in z.B. Rot (d.h. Vorgang abgeschlossen). Die Navigationsvorrichtung 12 fragt den Benutzer, ob der Start-/Standort A im Reisezielspeicher 21 gespeichert werden soll. Falls Ja, erfolgt eine Zuweisung eines Speicherplatzes im Reisezielspeicher 21 der Navigationsvorrichtung 12. Der Fahrer kann dem Startpunkt einen eigenen Namen eingeben.

Der "Back" Schriftzug wird dann z.B. wieder weiß. "Back" Funktion kann wieder mittels Betätigungselement 14 aktiviert werden.

Weitere mögliche Szenarien sind die folgenden:
In einem Funktions-Szenario 2 möchte der Fahrer im Schritt S5 nicht zurück zu A sondern den Zielort B als neuen Start-/Standort als ein Rückreiseziel eingeben. Er betätigt den grünen "BACK" Button und im Display erscheint in der beschriebenen Weise "Zielrückführung JA/NEIN?" (BACK?). Der Fahrer bestätigt mit Nein (symbolisiert durch -).

Schritt S9: Danach erscheint auf der Anzeigefläche 15 z.B.: "Startpunkt speichern JA/NEIN?" in Verbindung mit einem Positionszeiger auf der Straßenkarte MAP, welcher auf der Anzeigeeinrichtung 13 zeigt, wo der Starpunkt A war. Bei "Ja" wird der Benutzer gefragt, ob er die vorherigen Koordinaten A unter einem Namen im Reisezielspeicher 21 abspeichern möchte. Wenn "Ja", wird der Start-/Standpunkt A in einen normalen Speicherplatz vergeben und das neue Ziel B als Rückreiseziel ist danach direkt im Zwischenspeicher 20 aktiv. Wenn "Nein", wird das alte Ziel (A) mit dem neuen Start-/Standort B sofort im Zwischenspeicher 20 mit Ziel B überschrieben. Es erscheint auf dem Bildschirm "STARTPUNKT GESPEICHERT" somit ist der Zielort B aus dem ersten Beispiel jetzt neuer Startpunkt.

In einem Funktions-Szenario 3 gibt der Fahrer im Schritt S3 am Zielort B eine Adresse C z.B. per Hand oder Sprache an der Navigationsvorrichtung 12 für ein Navigations-Routenführung 23 ein, so bleibt diese vom Speicherplatz des Zwischenspeichers 20 des "BACK Buttons" unabhängig, da man diese (Adresse C) später unterletzte Ziele" wiederfinden kann. Der letzte Start-/Standort in der "BACK" Funktion bleibt weiterhin gespeichert (hier A).

Schritt S10: Beim Erreichen der von Hand/Sprache eingegebenen Zieladresse C ("Sie haben Ihr Ziel erreicht") wird der Fahrer, wenn er den "BACK" Button betätigt, vom System gefragt (die "BACK"-Funktion ist weiterhin aktiv, da sie von A nach B verwendet wurde): "Zielrückführung JA/NEIN?" (siehe Schritt S4). Wenn "Ja" bestätigt wird (+), blinkt der "BACK Button" grün, die Rückwärts-Navigation von C zu A ist gestartet (Schritt S6), die Route wird angezeigt.

In einem Funktions-Szenario 4 gibt der Fahrer im Schritt S3 am Zielort B eine Adresse C per Hand/Sprache ein und drückt danach den "BACK Button" (Schritt S4) so wird er gefragt, ob die Koordinaten A abgespeichert werden sollen (Schritt S5). Danach wird der Zielort B (siehe Funktions-Szenario 2) als "BACK" Startpunkt Koordinaten abgespeichert.

In einem Funktion-Szenario 5 fährt der Fahrer am Zielort B mit seinem Kraftfahrzeug 10 zu einem Ziel C ohne Navigationsassistenz und betätigt dort dann den "BACK" Button (die "BACK"-Funktion ist weiterhin aktiv, da sie in Schritt S1 von A nach B verwendet wurde): "Zielrückführung JA/NEIN?" Wenn JA bestätigt wird, blinkt der "BACK Button" grün, die "Rückwärts Navigation" von C zu A ist gestartet; die Route wird angezeigt. Es werden zwei Routen angeboten: Route R1 die kürzeste Verbindung zu Start- Standort A, von wo aus das Fahrzeug ursprünglich gestartet ist und demnach die Koordinaten bei der Rückführung hinterlegt worden sind, oder aber Route R0, wo anhand der Koordinaten die exakt gleiche Strecke zurück navigiert wird, von wo aus man gekommen ist. Es erfolgt abschließend eine Speicherabfrage (siehe Schritt S8 des Funktions-Szenarios 1).

Es sind zahlreiche Funktions-Ergänzungen bereitstellbar.

In Bezug auf verwendbare Mobilgeräte ist die "BACK" Funktion in einer Erweiterung auf alle Mobilgeräte über eine Applikation (sogenannte App) transferierbar, so dass auch Startpunkte/Zielrückführung mit allen anderen Verkehrsmitteln bzw. zu Fuß durchgeführt werden können. Eine Zielrückführung kann jederzeit aktiviert werden. Am Startpunkt z.B. "A" wird der "BACK" Button aktiviert zu einem Ziel "B", welches z.B. in einer verkehrsberuhigten Innenstadt liegt. Eine Reise von einem Start-/Standort "A" zu einem Parkplatz an der Innenstadt erfolgt im Fahrzeug, das dort abgestellt wird. Mit dem Verlassen des Fahrzeugs wird die Funktion auf das Mobilgerät übertragen. Die Person läuft in den Innenstadtbereich zu ihrem Ziel. Die Person möchte zurückgeführt werden und betätigt dort den grün hinterlegten (= Funktion aktiv) "BACK" Button. Es erscheint Zielrückrührung JA/NEIN ....."JA" Zielrückführung startet ("BACK" Button z.B. blinkt).

Die "BACK" Funktion hat die Übergabe der Rückführungsfunktion vom Fahrzeug an das Mobilgerät alternativ dazu automatisiert erkannt. Beim Ausstieg aus dem Fahrzeug wird im System automatisch der Fahrzeug-Standort hinterlegt. (Standort könnte auf der Karte gezeigt/markiert werden. Aber eigentlich ist dies für die Person nicht relevant, da sie komfortorientiert zurückgeführt werden möchte)
Szenario 1: Es wird eine einzige Rückführungsroute (hier Bsp. zu Fuß) bis zum Fahrzeug vorgeschlagen (exakte Route des Hinweqs über Koordinaten), welche direkt zum letzten Verkehrsmittel (hier dem Fahrzeug) zurückführt. Bei der "Rück-Übergabe" der "BACK" Funktion mit dem Einstieg in das Fahrzeug und der Systemaktivierung auf dem Bildschirm, ("BACK" Button z.B. blinkt grün) werden dann wie in Funktions-Szenario 1 bzw. 5 im Fahrzeug zwei Routen angezeigt: die kürzeste oder aber genau die Route mit der man unterwegs war. Nach dem Routenwählen erfolgt die Rückführung mit dem Fahrzeug. Ankunft am Star-/Standort "A" löst die Frage Start-/Standort "A" speichern ? aus.
   In diesem Szenario 1 kann nur eine Route (die welche für den Hinweg benutzt wurde) bis zum Fahrzeug vorgeschlagen werden, da das System nicht weiß, ob vom Fahrzeug aus /bei der Übergabe an das Mobilgerät das Fahrrad/zu Fuß/Fahrrad/Skateboard oder sonstige Verkehrsmittel benutzt worden sind. Das Angebot einer Alternativroute (kürzeste) könnte hier Verkehrswege beinhalten, welche für das tatsächlich benutzte Verkehrsmittel oder aber zu Fuß ungeeignet sind.
Szenario 2 (ZWEI ROUTEN): Mit dem Verlassen des Fahrzeugs wird sofort die Funktion "BACK" auf das Mobilgerät übertragen. Auf dem Mobilgerät erscheinen Icons/Bedienfelder zur Auswahl Bus/Bahn/Fahrrad/Fuß. Die Person wählt über ein korrespondierendes Bedienfeld eines der Verkehrsmittel, z.B. Fahrrad. Die Route wird jetzt dem Verkehrsmittel entsprechend vom Mobilgerät erfasst für die Rückführung. Auf seinem Mobilgerät innerhalb der App erscheint z.B. ein Fahrrad Symbol. Die Person stellt das Fahrrad ab und geht den letzten Weg zu Fuß. Die Person drückt auf das Fahrrad-Symbol auf der Bildschirmoberfläche ihres Mobilgerätes; es erscheinen wie beim Verlassen des Fahrzeugs ALLE "Verkehrsmittel Symbole". (Fahrrad/Bus/zu Fuß). Die Person drückt jetzt z.B. "zu Fuß" und die Route wird im "Modus" zu Fuß für die Rückführung vorbereitet. Bei der Aktivierung der "BACK" Funktion können jetzt an dem jeweiligen Übergabepunkt von einem Fortbewegungsmittel zum anderen (welche durch das jeweilige "drücken" des Symbols im System hinterlegt sind) Alternativrouten (z.B. Route R1, Route R0) für das jeweils benutzte Verkehrsmittel angeboten werden.
Szenario 3 (Zusatzfunktion Schienenverkehr): Mit dem Verlassen des Fahrzeugs wird sofort die Funktion "BACK" auf das Mobilgerät übertragen. Auf dem Mobilgerät erscheinen Icons zur Auswahl Bus/Bahn/Fahrrad/Fuß. Die Person wählt das nächste Verkehrsmittel die U-Bahn (= Schienenfahrzeug-Icon). Da das System den Ort kennt, wo sich die Person befindet, wird der Weg zur U-Bahnstation wie gewohnt für die Rückführungsfunktion vorbereitet. Mit dem Betreten der U Bahnstation erscheint auf dem Bildschirm des Mobilgerätes die Nummern der U-Bahnen, welche dort abfahren. Die Person bestätigt z.B. U8 oder U5/S4 oder S8. Das System erkennt über die Navigation automatisch, in welche Richtung sich die U-Bahn bewegt, so dass der Zielort nicht abgefragt werden muss. Beim Erreichen des Zielbahnhofs erkennt das System das Verlassen des Bahnhofs. Auf dem Mobilgerät erscheinen wieder die Mobilitätssymbole. Die Person wählt wieder die weitere Fortbewegung für das System aus.
Szenario 4 (Zusatzfunktion Schienen - Fernverkehr): Auf dem Mobilgerät erscheinen Icons zur Auswahl Bus/Bahn/Fahrrad/zu Fuß. Für den Schienen-Fernverkehr würde bei der Auswahl ein eigenes Icon stehen. Beim Aufrufen des Schienen-Fernverkehr-Icons müsste man dann nur z.B. die Zugnummer eintragen.
Szenario 5 (Flugzeug): Auf dem Mobilgerät erscheinen Icons zur Auswahl Bus/Bahn/Fahrrad/zu Fuß. Für das Flugzeug würde bei der Auswahl ein eigenes Icon stehen. Beim Aufrufen des Flugzeug-Icons müsste man dann nur die Flugnummer eintragen.
Szenario 6 (Mobilgerät): Selbstverständlich kann die "BACK"-Funktion auch auf dem Mobilgerät gestartet werden, wo immer man sich befindet. Da kein Kontakt mit dem Fahrzeug bestanden hat, erscheint automatisch die Mobilitätsauswahl Bus/Bahn/Fahrrad/Fuß auf dem Mobilgerät. Beim Benutzen eines Fahrzeugs in der Mobilitätskette werden die Daten auf das Fahrzeug übertragen.

Systemergänzungen können sich wie folgt ergeben. Wird der Start-/Standort A im Zwischenspeicher 20 nicht mehr abgerufen, so löscht sich der Zwischenspeicher 20 z.B. nach 24 Std. automatisch. Alternativ bleibt der Speicherinhalt immer bestehen, bis er aus seiner Funktion heraus überschrieben wird.

In einer erweiterten Funktion besteht die Möglichkeit, in den Einstellungen eine Funktion vorzusehen, welche es dem Fahrer erlaubt, einen Zeitraum X zu definieren, innerhalb dem nach Abstellen des Fahrzeugs beim Weiterfahren immer automatisch der letzte Start-/Standort mit seinen aktuellen Koordinaten im Zwischenspeicher 20 gespeichert wird. Immer der letzte Ort, wo das Kraftfahrzeug 10 länger als X Stunden/Minuten steht, wird dann automatisch zum neuen Rückreiseziel, zu dem man zurückgeführt wird und der alte Eintrag des Zwischenspeicher 20 wird überschrieben.

Insgesamt zeigt das Beispiel, wie durch die Erfindung eine Rückführ-Navigation bereitgestellt werden kann.

### Bezugszeichenliste

- 10: Kraftfahrzeug
- 11: Empfangseinrichtung
- 12: Navigationsvorrichtung
- 13: Anzeigeeinrichtung
- 14: Betätigungselement
- 15: Anzeigefläche
- 16: Prozessoreinrichtung
- 17: Sprachbefehl
- 18: Spracherkennungseinrichtung
- 19: Audioausgabeeinrichtung
- 20: Zwischenspeicher
- 21: Reisezielspeicher
- 22: Speicherbefehl
- 22': Rückführbefehl
- 23: Navigations-Routenführung
- MAP: Straßenkarte
- P: Positionsangabe
- S1 - S10: Schritt

## Patentansprüche

1. Verfahren zum Betreiben einer Navigationsvorrichtung (12) eines Kraftfahrzeugs (10), wobei wiederholt aus einer Lokalisierungseinrichtung (11) eine Positionsangabe (P) einer aktuellen Position der Navigationsvorrichtung (12) empfangen wird und zu Beginn oder während einer Reise ein vorbestimmter Speicherbefehl (22) empfangen wird und in Abhängigkeit von dem Speicherbefehl (22) die aktuelle Positionsangabe (P) in einem vorbestimmten Zwischenspeicher (20) als Rückreiseziel zwischengespeichert wird und zu Beginn oder während einer nachfolgenden Reise die in dem Zwischenspeicher (20) abgespeicherte Positionsangabe (P) für eine Navigationsassistenz der Navigationsvorrichtung (12) in Abhängigkeit von einem vorbestimmten Rückführbefehl (22') als Reiseziel für eine Rückreise eingestellt wird,
**dadurch gekennzeichnet, dass**
das in dem Zwischenspeicher (20) gespeicherte Rückreiseziel in Abhängigkeit von einem Übertragungsbefehl an eine andere Navigationsvorrichtung, die durch ein mobiles Endgerät eines Benutzers bereitgestellt ist, ausgesendet wird, wobei der Übertragungsbefehl in Abhängigkeit von einer Position des mobilen Endgeräts bezüglich des Kraftfahrzeugs (10) erzeugt wird.

2. Verfahren nach Anspruch 1, wobei der Speicherbefehl (22) und/oder der Rückführbefehl (22') über eine Bedieneinrichtung empfangen wird.

3. Verfahren nach Anspruch 2, wobei durch die Bedieneinrichtung für das Zwischenspeichern des Rückreiseziels in dem Zwischenspeicher (20) ein dediziertes, direkt zugängliches Betätigungselement (14) bereitgestellt wird.

4. Verfahren nach Anspruch 3, wobei bei wiederholtem Betätigen des Betätigungselements (14) der Speicherbefehl (22) und danach der Rückführbefehl (22') erzeugt wird.

5. Verfahren nach einem der vorhergehenden Ansprüche, wobei bei Empfangen eines weiteren Speicherbefehls (22) vor dem Abspeichern einer weiteren aktuellen Positionsangabe (P) in dem Zwischenspeicher (20) eine Reisezielbezeichnung ermittelt wird und die bereits in dem Zwischenspeicher (20) zwischengespeicherte Positionsangabe (P) in einen Reisezielspeicher (21) übertragen und dort unter der Reisezielbezeichnung abgespeichert wird.

6. Verfahren nach einem der vorhergehenden Ansprüche, wobei bei zwischengespeichertem Rückreiseziel eine von dem Rückreiseziel unabhängige Routenführung (23) durch die Navigationsassistenz durchgeführt wird.

7. Verfahren nach einem der vorhergehenden Ansprüche, wobei das in dem Zwischenspeicher (20) gespeicherte Rückreiseziel nach einer vorbestimmten Zeitdauer gelöscht wird.

8. Verfahren nach einem der vorhergehenden Ansprüche, wobei eine Aufenthaltsphase anhand eines vorbestimmten Verweilkriteriums erkannt wird und der Speicherbefehl (22) ohne ein Zutun eines Benutzers zu Beginn einer an die Aufenthaltsphase anschließenden Reise erzeugt wird.

9. Verfahren nach einem der vorhergehenden Ansprüche, wobei eine seit dem Abspeichern des Rückreiseziels zurückgelegte Reiseroute (R0) gespeichert wird und die Navigationsassistenz für die Rückreise zu dem Rückreiseziel entlang der gespeicherten Reiseroute (R0) durchgeführt wird.

10. Navigationsvorrichtung (12), wobei die Navigationsvorrichtung (12) eine Prozessoreinrichtung (16) aufweist, die dazu eingerichtet ist, ein Verfahren nach einem der vorhergehenden Ansprüche durchzuführen.

11. Kraftfahrzeug (10) mit einer Navigationsvorrichtung (12) nach Anspruch 10.

## Claims

1. A method for operating a navigation device (12) of a motor vehicle (10), wherein a position indication (P) of a current position of the navigation device (12) is repeatedly received from a localization device (11) and at the beginning or during a trip a predetermined store command (22) is received and depending on the store command (22) the current position indication (P) is intermediately stored in a predetermined intermediate storage (20) as the return destination and at the beginning or during a subsequent trip the position indication (P) stored in the intermediate storage (20) for a navigation assistance of the navigation device (12) is set as the destination for a return trip depending on a predetermined return command (22'),
**characterized in that**
the return destination stored in the intermediate storage (20) is transmitted depending on a transmission command to another navigation device, which is provided by a mobile device of a user, wherein the transmission command is generated depending on a position of the mobile device in relation to the motor vehicle (10).

2. The method according to Claim 1, wherein the store command (22) and/or the return command (22') is received via an operating device.

3. The method according to Claim 2, wherein a dedicated, directly accessible actuation element (14) is provided by the operating device for the intermediate storage of the return destination in the intermediate storage (20).

4. The method according to Claim 3, wherein, with repeated actuation of the actuation element (14), the store command (22) and then the return command (22') is generated.

5. The method according to any one of the preceding claims, wherein when a further store command (22) is received before the storage of a further current position indication (P) in the intermediate storage (20) a destination designation is determined and the position indication (P) already intermediately stored in the intermediate storage (20) is transmitted to a destination storage (21) and is stored there under the destination designation.

6. The method according to any one of the preceding claims, wherein, in the case of an intermediately stored return destination, a route guidance (23) independent of the return destination is carried out by the navigation assistance.

7. The method according to any one of the preceding claims, wherein the return destination stored in the intermediate storage (20) is deleted after a predetermined time period.

8. The method according to any one of the preceding claims, wherein a stay phase is detected on the basis of a predetermined dwell criterion and the store command (22) is generated without an intervention of the user at the beginning of a trip following the stay phase.

9. The method according to any one of the preceding claims, wherein a trip route (R0), which has been traveled since the storage of the return destination, is stored and the navigation assistance for the return trip to the return destination is carried out along the stored trip route (R0).

10. A navigation device (12), wherein the navigation device (12) has a processor device (16), which is configured to carry out a method according to any one of the preceding claims.

11. A motor vehicle (10) with a navigation device (12) according to Claim 10.

## Revendications

1. Procédé de fonctionnement d'un dispositif de navigation (12) d'un véhicule automobile (10), dans lequel, de manière répétée, à partir d'un dispositif de localisation (11), une information de position (P) d'une position actuelle du dispositif de navigation (12) est reçue et, au début ou pendant un voyage, une instruction d'enregistrement (22) prédéterminée est reçue et, en fonction de l'instruction d'enregistrement (22), l'information de position actuelle (P) est enregistrée dans une mémoire tampon (20) prédéterminée en tant que destination du voyage retour et, au début ou pendant un voyage suivant, l'infirmation de position (P) enregistrée dans la mémoire tampon (20) est réglée comme destination pour un voyage de retour pour une assistance de navigation du dispositif de navigation (12) en fonction d'une instruction de retour (22') prédéterminée,
**caractérisé en ce que**
la destination de voyage retour enregistrée dans la mémoire tampon (20) est émise en fonction d'une instruction de transmission, à un autre dispositif de navigation, qui est mis à disposition d'un utilisateur grâce à un terminal mobile, dans lequel l'instruction de transmission est générée en fonction d'une position du terminal mobile par rapport au véhicule automobile (10).

2. Procédé selon la revendication 1, dans lequel l'instruction d'enregistrement (22) et/ou l'instruction de retour (22') est reçue par l'intermédiaire d'un dispositif de commande.

3. Procédé selon la revendication 2, dans lequel le dispositif de commande met à disposition, pour l'enregistrement de la destination du voyage de retour dans la mémoire tampon (20), un élément d'actionnement (14) dédié directement accessible.

4. Procédé selon la revendication 3, dans lequel, lors d'un actionnement répété de l'élément d'actionnement (14), l'instruction d'enregistrement (22) puis l'instruction de retour (22') sont générées.

5. Procédé selon l'une des revendications précédentes, dans lequel, lors de la réception d'une autre instruction d'enregistrement (22) avant l'enregistrement d'une autre information de position actuelle (P) dans la mémoire tampon (20), une désignation de destination est déterminée et l'information de position (P) déjà enregistrée dans la mémoire tampon (20) est transférée vers une mémoire de destination (21) et y est enregistrée sous la désignation de destination.

6. Procédé selon l'une des revendications précédentes, dans lequel, lorsque la destination du voyage retour est enregistrée dans la mémoire tampon, un guidage d'itinéraire (23) indépendant de la destination du voyage retour est effectué par l'assistance de navigation.

7. Procédé selon l'une des revendications précédentes, dans lequel la destination de voyage retour enregistrée dans la mémoire tampon (20) est effacée après une période prédéterminée.

8. Procédé selon l'une des revendications précédentes, dans lequel une phase de séjour est détectée à l'aide d'un critère de séjour prédéterminé et l'instruction d'enregistrement (22) est générée sans l'intervention d'un utilisateur au début d'un voyage suivant la phase de séjour.

9. Procédé selon l'une des revendications précédentes, dans lequel un itinéraire (R0) parcouru depuis l'enregistrement de la destination du voyage retour est enregistré et l'assistance de navigation est effectuée pour le voyage retour vers la destination du voyage retour le long de l'itinéraire (R0) enregistré.

10. Dispositif de navigation (12), dans lequel le dispositif de navigation (12) comprend un dispositif à processeur (16) qui est conçu pour exécuter un procédé selon l'une des revendications précédentes.

11. Véhicule automobile (10) avec un dispositif de navigation (12) selon la revendication 10.
